# EUROPEAN PATENT SPECIFICATION

(11) **EP 2 669 793 B1**
(45) Date of publication and mention of the grant of the patent: **23.12.2020**
(21) Application number: 12752175.5
(22) Date of filing: 28.02.2012
(51) Int. Cl.: G06F 9/451, G06F 16/9038, G06F 16/9538, G06F 16/954

(54) **INTERFACE AUTONOMOUS PLANNING METHOD AND DEVICE**
VERFAHREN UND VORRICHTUNG FÜR AUTONOME SCHNITTSTELLENPLANUNG
PROCÉDÉ ET DISPOSITIF DE PLANIFICATION AUTONOME D'INTERFACE

(30) Priority: 28.02.2011 CN 201110047434
(43) Date of publication of application: 04.12.2013
(73) Proprietor: Huawei Device Co., Ltd., Dongguan, Guangdong 523808 (CN)
(72) Inventor: ZHANG, Mingxiu, Shenzhen Guangdong 518129 (CN)
(74) Representative: Gill Jennings & Every LLP
(86) International application number: PCT/CN2012/071741
(87) International publication number: WO 2012/116634

(56) References cited:
- WO-A2-02/01388
- CN-A- 101 025 761
- CN-A- 101 561 758
- CN-A- 101 655 793
- CN-A- 102 087 600
- US-A1- 2005 289 475
- US-A1- 2005 289 475
- US-A1- 2007 174 782
- US-B1- 7 117 452

## Description

### TECHNICAL FIELD

Embodiments of the present invention relate to computer technologies, and in particular, to an interface autonomous planning method and apparatus.

### BACKGROUND

At present, an interface element layout method used for interfaces of various terminals such as the interface of a mobile phone, the interface of a personal digital assistant, the interface of a palmtop computer, and the interface of a personal computer includes: enumerating all interface elements on an interface in a set arrangement mode, or dividing interface elements into the fixed number of types, and arranging the interface elements into different regions of the interface according to the types.

US7,117,452 refers to a system, method, and computer readable medium creating a custom frameset within at least one non-based computer application. The system enables a user to customize a view containing a plurality of documents in frames, the documents may include web documents and non-web documents, using predefined framesets. A graphical user interface may be provided that presents a user with various options relating to predefined framesets. The user may select one or more options relating to various attributes of each frame within a predefined frameset including the number, size, and orientation, to customize the layout of the view. The user may then specify one or more attributes to be assigned to each frame. The predefined frameset may then be customized according to the user's selection(s). The options may also include enabling users to divide the view into individual frames. The user may also be presented with one or more graphical user interfaces which present the user with various options that may be customized for a particular view.

WO02/01388 refers to a portal server that presents an HTML page that comprises a plurality of modules. Each module represents a network resource that can be accessed by a user through the portal. The portal server includes an administration interface that enables an administrator to select from various layout styles for a page of the portal. In establishing a layout an administrator specifies the number of dividers and cells to generate on the layout. The administrator also defines the width of dividers and cells. The interface enables a variety of layout schemes to be employed. In addition, a variety of modifications can be done to the portal without requiring programming skills. An updateable subsystem class is configured to instantiate an update subsystem object. The update subsystem object is operable to select an updated implementation of module from a set of update servers. An appropriate update server is selected from a set of update servers based on host identification information of a site hosting the portal including the module.

Further, US20050289475A refers to graphical user interface for accessing, managing, organizing and using local and online content from a personal computer. The graphical user interface is divided into several modules, displayed on the display screen of the computer. Some of these modules are categories, which contain links to content online and on the hard drive of the computer. The user can customize these categories and the links within them to suit his or her personal needs, interests, and tastes. One or more of the modules within the GUI are media players. The user can select content by dragging and dropping a link from the desktop, another application, or a category within the GUI onto the media player. Applications required to access content referred to by links within the categories of the graphical user interface are launched at the time that the GUI is launched.

However, this interface layout method is fixed for a user. The user is unable to lay out each interface element on the interface according to a preference.

### SUMMARY

Embodiments of the present invention provide an interface autonomous planning method and apparatus to overcome the disadvantage that a user cannot autonomously select an interface layout in the prior art and to achieve the objective of laying out an interface according to the user's preference.

An embodiment of the present invention provides an interface autonomous planning method, including:
dividing, according to an interface layout request, an interface into regions, the number of which is the same as the number of interface element types in the interface layout request, where the interface layout request includes the number of interface element types and wherein the interface element type is text information indicating the interface element type;
dividing each region into a text block and an element block; the text block being used to display an interface element type corresponding to the region, and the element block being used to draw all interface elements of the interface element type corresponding to the region, wherein the interface elements arc icons; and
arranging, according to an interface element division request, each interface element to an element block of a region corresponding to an interface element type of the interface element, and displaying, in a text block of each region, an interface element type corresponding to the region, where the interface element division request includes interface element types of interface elements and interface element types corresponding to the regions;
wherein after the dividing an interface into regions, the number of which is the same as the number of interface element types, the method further comprises: determining a shape and size of each region on the interface according to the shape and size of the region in the interface layout request, wherein the interface layout request further comprises the shape and size of the region.

An embodiment of the present invention provides an interface autonomous planning apparatus, including:
a receiving module, configured to: receive an interface layout request, where the interface layout request includes the number of interface element types; and further configured to receive an interface element division request, where the interface element division request includes interface element types of interface elements and interface element types corresponding to regions;
a region dividing module, configured to divide, according to the interface layout request, an interface into regions, the number of which is the same as the number of interface element types and wherein the interface element type is text information indicating the interface element type;
a block dividing module, configured to divide each region into a text block and an element block; the text block being used to display an interface element type corresponding to the region, and the element block being used to draw all interface elements of the interface element type corresponding to the region, wherein the interface elements are icons; and
an arranging module, configured to arrange, according to the interface element division request, each interface element to an element block of a region corresponding to an interface element type of the interface element, and display, in a text block of each region, an interface element type corresponding to the region;
wherein the region dividing module is further configured to determine a shape and size of each region on the interface according to the shape and size of the region in the interface layout request, wherein the interface layout request further comprises the shape and size of the region.

With the interface autonomous planning method and apparatus provided by the embodiments of the present invention, a terminal divides an interface into the corresponding number of regions according to the number of interface element types selected by a user, where the layout of regions is based on a preset region layout mode, and divides each region into a text block for displaying an interface element type and an element block for arranging interface elements. Therefore, the terminal may provide interfaces with different layouts for the user according to the autonomous selection of the user. Each region has display information indicating an interface element type, and an interface element in each region may also be drawn according to the autonomous selection of the terminal. Therefore, the embodiments of the present invention achieve the objective of laying out an interface according to the user's preference.

An embodiment of the present invention further provides an interface autonomous planning method, including:
dividing an interface into 2^{∗}N blocks according to the number of interface element types in an interface division request, where N is the number of interface element types, and the interface division request includes the number of interface element types, display positions of the interface element types, each interface element type, and an interface element type of each interface element;
when the display positions of the interface element types indicate that the interface element types are displayed in a row, setting all blocks in a first row as text blocks, displaying an interface element type in each text block, setting all blocks in a second row as element blocks, and drawing, in each element block, an interface element corresponding to an interface element type displayed in a text block in a same column;
when the display positions of the interface element types indicate that the interface element types are displayed in a column, setting all blocks in a first column as text blocks, displaying an interface element type in each text block, setting all blocks in a second column as element blocks, and drawing, in each element block, an interface element corresponding to an interface element type displayed in a text block in a same row.

An embodiment of the present invention further provides an interface autonomous planning apparatus, including:
a dividing module, configured to divide an interface into 2^{∗}N blocks according to the number of interface element types in an interface division request, where N is the number of interface element types, and the interface division request includes the number of interface element types, display positions of the interface element types, each interface element type, and an interface element type of each interface element;
a first drawing module, configured to: when the display positions of the interface element types indicate that the interface element types are displayed in a row, set all blocks in a first row as text blocks, display an interface element type in each text block, set all blocks in a second row as element blocks, and draw, in each element block, an interface element corresponding to an interface element type displayed in a text block in a same column;
a second drawing module, configured to: when the display positions of the interface element types indicate that the interface element types are displayed in a column, set all blocks in a first column as text blocks, display an interface element type in each text block, set all blocks in a second column as element blocks, and draw, in each element block, an interface element corresponding to an interface element type displayed in a text block in a same row.

With the interface autonomous planning method and apparatus provided by the embodiments of the present invention, a terminal divides, according to the number of interface element types selected by a user, an interface into blocks, the number of which is twice the number of interface element types, and according to the display positions of the interface element types selected by the user, displays the interface element types in all blocks of the first row or first column, and displays, in an adjacent block in the second row or an adjacent block in the second column, all interface elements of an interface element type corresponding to a block in the same column or same row. Therefore, the terminal may provide interfaces with different layouts for the user according to the autonomous selection of the user, set a block where each interface element is located, and set an interface element type of each interface element. Therefore, the objective of laying out an interface according to the user's preference is achieved.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.

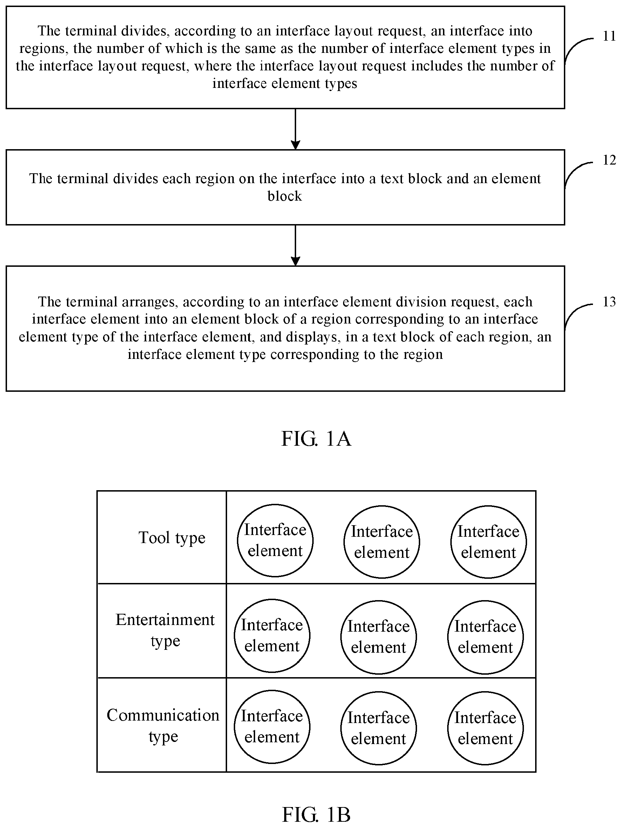

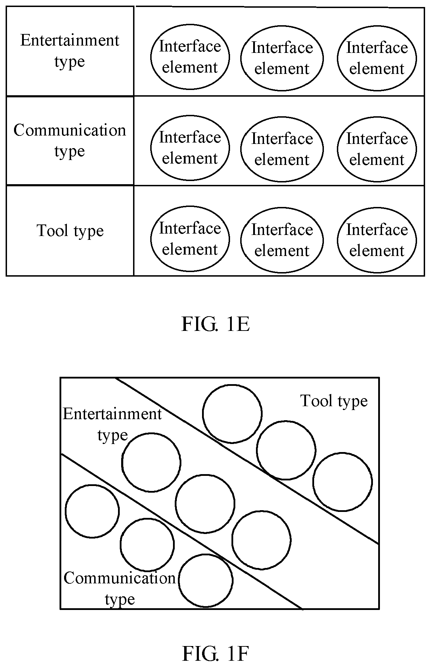

FIG. 1A is a flowchart of an interface autonomous planning method according to an embodiment of the present invention;
FIG. 1B is an interface layout mode diagram of an interface autonomous planning method according to an embodiment of the present invention;

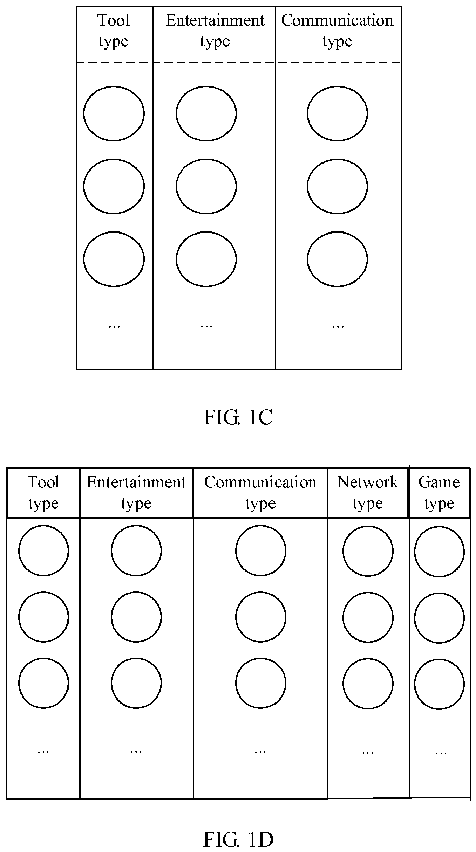

FIG. 1C is another interface layout mode diagram of an interface autonomous planning method according to an embodiment of the present invention;
FIG. ID is still another interface layout mode diagram of an interface autonomous planning method according to an embodiment of the present invention;
FIG. IE is still another interface layout mode diagram of an interface autonomous planning method according to an embodiment of the present invention;
FIG. IF is still another interface layout mode diagram of an interface autonomous planning method according to an embodiment of the present invention;
FIG. 1G is still another interface layout mode diagram of an interface autonomous planning method according to an embodiment of the present invention;
FIG. 2 is a schematic structural diagram of an interface autonomous planning apparatus according to a first embodiment of the present invention;
FIG. 3A is a schematic structural diagram of an interface autonomous planning apparatus according to a second embodiment of the present invention;
FIG. 3B is a schematic structural diagram of an interface autonomous planning apparatus according to a third embodiment of the present invention;
FIG. 4A is a flowchart of another interface autonomous planning method according to an embodiment of the present invention;
FIG. 4B is an interface layout mode diagram of another interface autonomous planning method according to an embodiment of the present invention;
FIG. 4C is another interface layout mode diagram of another interface autonomous planning method according to an embodiment of the present invention; and
FIG. 5 is a schematic structural diagram of another interface autonomous planning apparatus according to an embodiment of the present invention.

### DESCRIPTION OF EMBODIMENTS

To make the objectives, technical solutions, and advantages of the embodiments of the present invention more comprehensible, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

The interface autonomous planning method provided by the present invention is capable of providing an interface layout selection interface for a user to receive an interface layout mode selected by the user and presenting an interface with drawn application icons to the user according to the interface layout mode autonomously selected by the user.

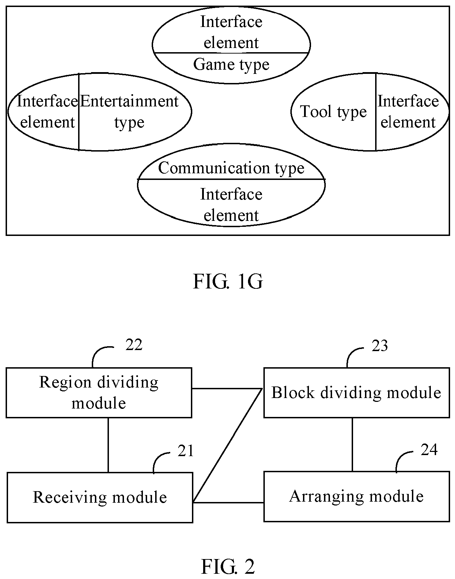

FIG. 1A is a flowchart of an interface autonomous planning method according to an embodiment of the present invention. FIG. 1B is an interface layout mode diagram of an interface autonomous planning method according to an embodiment of the present invention. FIG. 1C is another interface layout mode diagram of an interface autonomous planning method according to an embodiment of the present invention. FIG. ID is still another interface layout mode diagram of an interface autonomous planning method according to an embodiment of the present invention. FIG. IE is still another interface layout mode diagram of an interface autonomous planning method according to an embodiment of the present invention. FIG. IF is still another interface layout mode diagram of an interface autonomous planning method according to an embodiment of the present invention. FIG. 1G is still another interface layout mode diagram of an interface autonomous planning method according to an embodiment of the present invention.

The executing entity in this embodiment may be a terminal or a central processing unit of the terminal. As shown in FIG. 1A, this embodiment includes:
Step 11: The terminal divides, according to an interface layout request, an interface into regions, the number of which is the same as the number of interface element types in the interface layout request, where the interface layout request includes the number of interface element types.

In the embodiment of the present invention, the terminal provides the user with a man-machine interface for inputting or selecting the number of interface element types. The terminal receives the interface layout request of the user through the man-machine interface, where the interface layout request includes the number of interface element types requested by the user. The number of interface element types is abbreviated as an interface element type quantity, and is the number of types of all interface elements divided by the user. In the embodiment of the present invention, interface elements of a type are drawn in a region. Therefore, the number of interface element types is also the number of regions obtained by dividing the interface.

After receiving the interface layout request of the user, the terminal divides, according to the number of interface element types and a preset region layout mode, the interface into regions, the number of which is the same as the number of interface element types. For example, the user selects to divide all interface elements into three types, that is, the number of interface element types is three; as shown in FIG. 1B, after receiving the interface layout request of the user, the terminal divides the regions on the interface into three regions according to the interface layout request, where the regions are arranged according to the region layout mode preset by the terminal. The arrangement in a default region layout mode is that each region is in a rectangular shape and occupies a row of the interface.

The region layout mode may be preset by the terminal or set by the user. Further, the terminal provides the user with a man-machine interface for inputting or selecting a region layout mode. The region layout mode is a region arrangement mode, for example, regions are arranged by columns, regions are arranged by rows, or regions are arranged together to form a diamond. After receiving the interface layout request of the user, the terminal divides, according to the region layout mode, the interface into regions, the number of which is the same as the number of interface element types.

For example, the user selects to divide all interface elements into three types, that is, the number of interface elements is three, and the user selects to arrange regions by rows, that is, the region layout mode is that regions are arranged by rows. As shown in FIG. 1B, after receiving the interface layout request of the user, the terminal divides the regions on the interface into three regions according to the interface layout request, and each region is in a rectangular shape and occupies a row of the intcrfacc.

For another example, the user selects to divide all interface elements into three types, and the user selects to arrange regions by columns, that is, the region layout mode is that regions are arranged by columns. As shown in FIG. 1C, after receiving the interface layout request of the user, the terminal also divides the interface into three regions, and each region is also in a rectangular shape, but the interface layout mode is different from that of FIG. 1B, and each region on the interface occupies a column of the interface, that is, regions are arranged by columns. For another example, the user selects to divide all interface elements into five types, and the user also selects to arrange regions by columns. As shown in FIG. 1D, after receiving the interface layout request of the user, the terminal divides the interface into five regions. The region layout mode is the same as the region layout mode shown in FIG. 1C, but the number of regions on the interface is different from that in FIG. 1C. For another example, the user selects to divide all interface elements into five types, and the user selects to arrange the regions by diagonals. As shown in FIG. IF, the terminal divides the regions on the interface into three regions according to the interface layout request, and the regions are arranged by diagonals. For another example, the user selects to divide all interface elements into four types, and the user selects to arrange the regions to form a diamond. As shown in FIG. 1G, the terminal divides the regions on the interface into four regions according to the interface layout request, and the regions are arranged to form a diamond.

Further, a shape and size of each region on the interface may be preset by the terminal, or selected by the user autonomously. When the user autonomously determines a shape and size of each region, the user inputs or selects a shape and size of each region through the man-machine interface provided by the terminal, that is, the interface layout request of the user further includes a size and shape of each region requested by the user. The terminal sets a shape and size of each region on the interface according to the shape and size of each region selected by the user. As shown in FIG. 1B to FIG. 1G, the shape of the region may be a rectangle, a circle, a triangle, or the like.

Step 12: The terminal divides each region on the interface into a text block and an element block.

The terminal divides each region on the interface into two blocks: a text block and an element block. The text block is used to display an interface element type corresponding to the region, and the element block is used to draw all interface elements of the interface element type corresponding to the region. An interface element is an icon, and an interface element type is text information indicating the interface element type.

Further, a shape, position, and size of each block may be preset by the terminal or autonomously selected by the user. When the user autonomously selects a shape, position, and block size of each block, the user selects a block shape, block position, and block size through the man-machine interface provided by the terminal. After receiving a block layout request, the terminal divides each region into two blocks according to the block shape, block position, and block size selected by the user, and sets one of the blocks as a text block and the other block as an element block according to a block attribute in the block layout request.

Step 13: The terminal arranges, according to an interface element division request, each interface element to the element block of the region corresponding to an interface element type of the interface element, and displays, in a text block of each region, the interface element type corresponding to the region.

The user selects an interface element type corresponding to each region through the man-machine interface, and sets an interface element type for each interface element. That is, the interface element division request received by the terminal includes an interface element type of an interface element and an interface element type corresponding to the region. As shown in FIG. 1B, an interface element type displayed in a text block of a corresponding region in a first row is "tool type", and correspondingly, what is drawn in an element block of the corresponding region in the first row is an interface element which is obtained by autonomous dividing performed by the user and belongs to the tool type, for example, a notebook, an alarm clock or the like. An interface element type displayed in a text block of a corresponding region in a second row is "entertainment type", and correspondingly, what is drawn in an element block of the corresponding region in the second row is an interface element which is defined by the user and belongs to the entertainment type, for example, a multimedia player, chatting software or the like. The number of regions and the region layout mode in FIG. IE are the same as those in FIG. 1B, but an interface element drawn in an element block in each region in FIG. IE is different from that in FIG. 1B. The above differences are all set according to different selection of the user.

In addition, before arranging an interface element to an element block, the terminal may set an icon and a shape of the interface element according to the icon and shape of the interface element in the interface element division request. Specifically, the user sets an icon and a shape of each interface element through the man-machine interface; before the terminal arranges each interface element to an element block of a region corresponding to an interface element type of the interface element, the terminal sets an icon and a shape of the interface element according to the icon and shape of the interface element set by the user.

The specific method for the terminal to arrange interface elements to element blocks and display the corresponding interface element types in the regions may be implemented by using the following two manner:

One manner is: Through the man-machine interface, the user uniformly sets interface element types for all interface elements, and uniformly sets corresponding interface element types for all regions. That is, a first interface element division request received by the terminal includes an interface element type of each interface element and an interface element type corresponding to each region. After receiving the first interface element division request, the terminal arranges each interface element to an element block of a corresponding region according to information in the first interface element division request, and after displaying an interface element type in a text block of each region, displays a final interface layout to the user.

For example, the terminal provides a layout setting list for the user through a man-machine interface. In the list, each interface element corresponds to an entry, and each region corresponds to an entry. An entry corresponding to an interface element provides the user with a selection button for setting an interface element type corresponding to the interface element, and an entry corresponding to a region provides the user with an input box for setting an interface element type corresponding to the region. After receiving the layout list, the terminal arranges each interface element to a corresponding region according to the information in the list, and after displaying an interface element type in each region, displays an interface layout to the user.

Another manner is: The user inputs, in a text block of each region, an interface element type corresponding to the region through the man-machine interface, and drags each interface element to an element block of a corresponding region. That is, the terminal firstly receives second interface element division requests one by one, where a second interface element division request includes an interface element type corresponding to a region. The terminal sets, in a text block of each region, an interface element type of each region according to the second interface element division requests in sequence. Afterward, the terminal receives third interface element division requests one by one, where a third interface division request includes an interface element type of an interface element. The terminal arranges, according to the third interface element division requests in scqucncc, each interface element to an element block of a region corresponding to an interface element type of the interface element.

With the interface autonomous planning method provided by the embodiment of the present invention, the terminal divides an interface into the corresponding number of regions according to the number of interface element types selected by the user, where the layout of regions is based on a preset region layout mode or a region layout mode set by the user, and divides each region into a text block for displaying an interface element type and an element block for arranging interface elements. Therefore, the terminal may provide interfaces with different layouts for the user according to the autonomous selection of the user. Each region has display information indicating an interface element type, and an interface element in each region may also be drawn according to the autonomous selection of the terminal. Therefore, the embodiment of the present invention achieves the objective of laying out an interface according to the user's preference.

FIG. 2 is a schematic structural diagram of an interface autonomous planning apparatus according to a first embodiment of the present invention. As shown in FIG. 2, this embodiment includes a receiving module 21, a region dividing module 22, a block dividing module 23, and an arranging module 24.

The receiving module 21 is configured to: receive an interface layout request, where the interface layout request includes the number of interface element types; and further configured to receive an interface element division request, where the interface element division request includes interface element types of interface elements and interface element types corresponding to regions.

The region dividing module 22 is configured to divide, according to the interface layout request received by the receiving module 21, an interface into regions, the number of which is the same as the number of interface element types. Further, the interface layout request includes a region layout mode. The region dividing module 22 is specifically configured to arrange the regions according to the region layout mode.

Further, the interface layout request includes a region shape and a region size. The region dividing module 22 is further configured to determine a shape and size of each region on the interface according to the region shape and region size in the interface layout request.

The block dividing module 23 is configured to divide each region, obtained by the dividing performed by the region dividing module 22, into a text block and an element block. Further, the block dividing module 23 is specifically configured to divide each region into two blocks according to a block shape, block position, and block size in a block layout request received by the receiving module 21, and set one of the blocks as a text block and the other block as an element block according to a block attribute in the block layout request.

The arranging module 24 is configured to arrange, according to the interface element division request, each interface element to an element block of a region corresponding to an interface element type of the interface element, and display, in a text block of each region, an interface element type corresponding to the region, where the interface element division request includes interface element types of interface elements and interface element types corresponding to the regions. Further, the arranging module 24 is configured to set, according to the icon and shape of an interface element, the icon and shape of the interface element, where the interface element division request further includes the icon and shape of the interface element.

The working mechanism of each module above is described in the embodiment corresponding to FIG. 1A, and is not further described herein.

In the embodiment of the present invention, the terminal divides an interface into the corresponding number of regions according to the number of interface element types selected by a user, where the layout of regions is based on a preset region layout mode or a region layout mode set by the user, and divides each region into a text block for displaying an interface element type and an element block for arranging interface elements. Therefore, the terminal may provide interfaces with different layouts for the user according to the autonomous selection of the user. Each region has display information indicating an interface element type, and an interface element in each region may also be drawn according to the autonomous selection of the terminal. Therefore, the embodiment of the present invention achieves the objective of laying out an interface according to the user's preference.

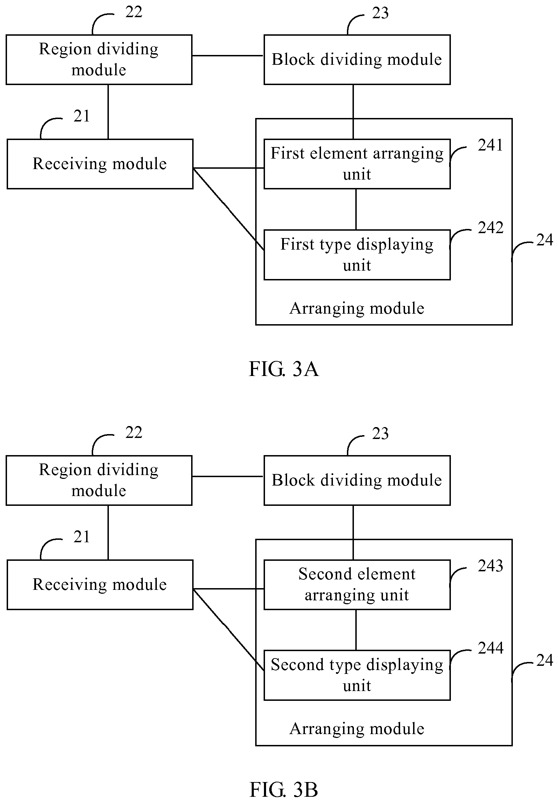

FIG. 3A is a schematic structural diagram of an interface autonomous planning apparatus according to a second embodiment of the present invention. As shown in FIG. 3A, an arranging module 24 includes: a first element arranging unit 241 and a first type displaying unit 242.

The interface element division request received by a receiving module 21 includes a first interface element division request. The first interface element division request includes an interface element type of each interface element and an interface element type corresponding to each region.

The first element arranging unit 241 is configured to arrange, according to the received first interface element division request, each interface element to an element block of a region corresponding to an interface element type of the interface element.

The first type displaying unit 242 is configured to display, in a text block of each region, an interface element type corresponding to the region in the first interface element division request.

The working mechanism of each module above is described in the embodiment corresponding to FIG. 1A, and is not further described herein.

In this embodiment, a user may uniformly set interface element types for all interface elements through a man-machine interface, and uniformly set corresponding interface element types for all regions. After receiving the first interface element division request, the terminal arranges each interface element to an element block of a corresponding region according to information in the first interface element division request, and after displaying an interface element type in a text block of each region, displays a final interface layout to the user.

FIG. 3B is a schematic structural diagram of an interface autonomous planning apparatus according to a third embodiment of the present invention. As shown in FIG. 3B, an arranging module 24 includes: a second element arranging unit 243 and a second type displaying unit 244.

The interface element division request received by a receiving module 21 includes a second interface element division request and a third interface element division request. The second interface element division request includes an interface element type corresponding to a region, and the third interface element division request includes an interface element type of an interface element.

The second element arranging unit 243 is configured to arrange, according to third interface element division requests received in sequence, each interface element to an element block of a region corresponding to an interface element type of the interface element in sequence.

The second type displaying unit 244 is configured to display, in a text block of each region, an interface element type corresponding to the region in sequence according to second interface element division requests received in sequence.

The working mechanism of each module above is described in the embodiment corresponding to FIG. 1A, and is not further described herein.

In this embodiment, a user may input, in a text block of each region, an interface element type corresponding to the region through a man-machine interface, and drag each interface element to an element block of a corresponding region. The terminal sets, in a text block of each region, an interface element type of the region according to the second interface element division requests in sequence. Afterward, the terminal receives third interface division requests one by one, where a third interface division request includes an interface element type of an interface element. The terminal arranges, according to the third interface division requests in sequence, each interface element to an element block of a region corresponding to an interface element type of the interface element.

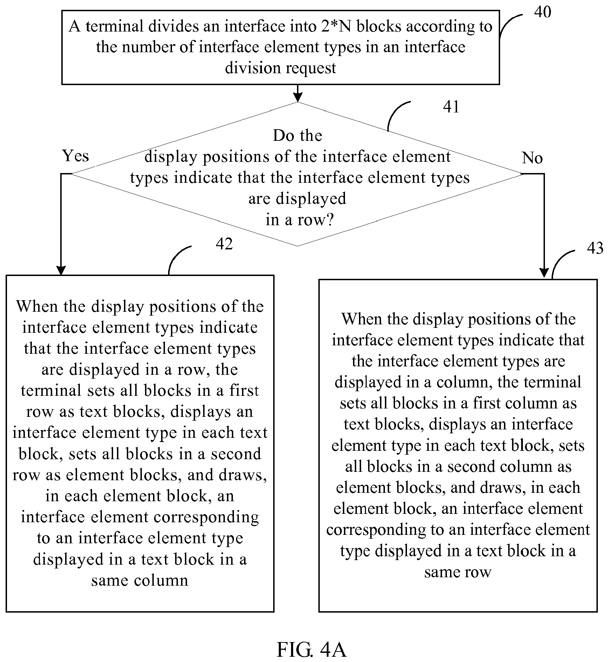

FIG. 4A is a flowchart of another interface autonomous planning method according to an embodiment of the present invention. As shown in FIG. 4A, this embodiment includes:

Step 40: A terminal divides an interface into 2^{∗}N blocks according to the number of interface element types in an interface division request, where N is the number of interface element types.

The terminal receives the interface division request of a user through a man-machine interface. The interface division request includes the number of interface element types, display positions of the interface element types, each interface element type, and an interface element type of each interface element which are requested by the user. The number of interface element types is abbreviated as an interface element type quantity, and is the number of types of all interface elements divided by the user. An interface element type is text information indicating the interface element type.

Step 41: The terminal determines whether the display positions of the interface element types indicate that the interface element types are displayed in a row. If yes, the process goes to step 42; otherwise, the process goes to step 43.

Step 42: When the display positions of the interface element types indicate that the interface element types are displayed in a row, the terminal sets all blocks in a first row as text blocks, displays an interface element type in each text block, sets all blocks in a second row as element blocks, and draws, in each element block, an interface element corresponding to an interface element type displayed in a text block in a same column.

If the display positions of the interface element types requested by the user in the interface division request indicate that the interface element types are displayed in a row, that is, the interface element types are displayed in all blocks in the first row, the terminal sets all blocks in the first row as text blocks, and correspondingly sets all blocks in the second row as element blocks. A text block is used to display an interface element type corresponding to a region, and an element block is used to draw all interface elements of an interface element type corresponding to the region. An interface element is an icon, and an interface element type is text information indicating the interface element type.

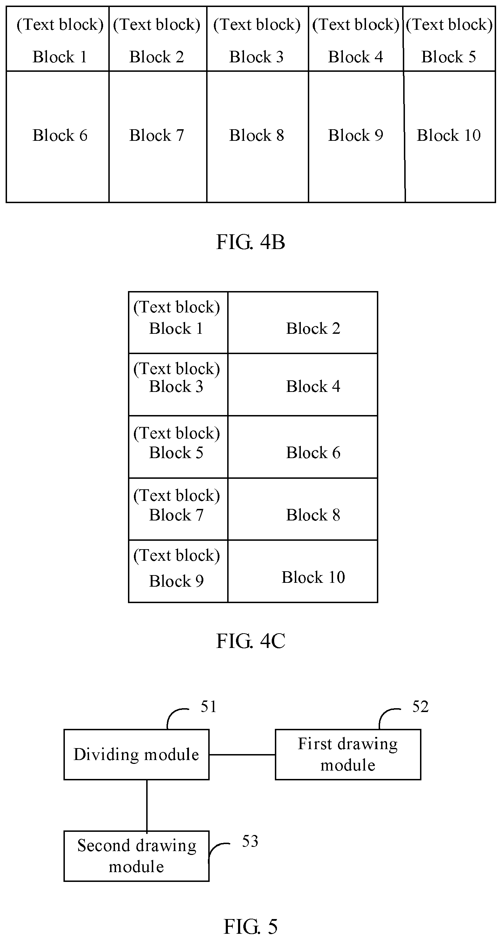

As shown in FIG. 4B, a user selects to divide interface elements into five types and selects to display interface element types in a row, and the terminal divides the interface into 2^{∗}5 (2 rows and 5 columns) blocks after receiving the interface division request of the user. Afterward, the user selects an attribute of each block in sequence from left to right and from the top down; according to the user's sclcction, the terminal sets attributes of all blocks in a first row: block 1, block 2, block 3, block 4, and block 5 as text blocks, and sets attributes of all blocks in a second row: block 6, block 7, block 8, block 9, and block 10 as element blocks, where block 6, block 7, block 8, block 9, and block 10 are used for placing icons and names of interface elements corresponding to block 1, block 2, block 3, block 4, and block 5, respectively. Then, the terminal displays interface element types input by the user in the 5 text blocks, for example, a tool type, an entertainment type, a communication type, a network type, and a game type, in block 1, block 2, block 3, block 4, and block 5, respectively. Finally, the terminal displays all interface elements of an interface element type corresponding to a text block in a same column in each of block 6, block 7, block 8, block 9, and block 10.

Step 43: When the display positions of the interface element types indicate that the interface element types are displayed in a column, the terminal sets all blocks in a first column as text blocks, displays an interface element type in each text block, sets all blocks in a second column as element blocks, and draws, in each element block, an interface element corresponding to an interface element type displayed in a text block in a same row.

If the display positions of the interface element types requested by the user in the interface division request indicate that the interface element types are displayed in a column, that is, the interface element types are displayed in all blocks in the first column, the terminal sets all blocks in the first column as text blocks, and correspondingly sets all blocks in the second column as element blocks. A text block is used to display an interface element type corresponding to a region, and an element block is used to draw all interface elements of an interface element type corresponding to the region. An interface element is an icon, and an interface element type is text information indicating the interface element type.

As shown in FIG. 4C, the user selects to divide interface elements into five types and selects to display interface element types in a column, and the terminal divides the interface into 5^{∗}2 (5 rows and 2 columns) blocks after receiving the interface division request of the user. Afterward, the user selects an attribute of each block in sequence from left to right and from the top down; according to the user's selection, the terminal sets attributes of all blocks in a first column: block 1, block 3, block 5, block 7, and block 9 as text blocks, and sets attributes of all blocks in a second column: block 2, block 4, block 6, block 8, and block 10 as element blocks, where block 2, block 4, block 6, block 8, and block 10 arc used for placing icons and names of interface elements corresponding to block 1, block 3, block 5, block 7, and block 9, respectively. Then, the terminal displays interface element types input by the user in the 5 text blocks, for example, a tool type, an entertainment type, a communication type, a network type, and a game type, in block 1, block 3, block 5, block 7, and block 9 respectively. Finally, the terminal displays all interface elements of an interface element type corresponding to a text block in a same row in each of in block 2, block 4, block 6, block 8, and block 10.

With the interface autonomous planning method provided by the embodiment of the present invention, the terminal divides, according to the number of interface element types selected by the user, an interface into blocks, the number of which is twice the number of interface element types, and according to the display positions of the interface element types selected by the user, displays the interface element types in all blocks of the first row or first column, and displays, in an adjacent block in the second row or an adjacent block in the second column, all interface elements of an interface element type corresponding to a block in the same column or same row. Therefore, the terminal may provide interfaces with different layouts for the user according to the autonomous selection of the user, set a block where each interface element is located, and set an interface element type of each interface element. Therefore, the objective of laying out an interface according to the user's preference is achieved.

FIG. 5 is a schematic structural diagram of another interface autonomous planning apparatus according to an embodiment of the present invention. As shown in FIG. 5, this embodiment includes: a dividing module 51, a first drawing module 52, and a second drawing module 53.

The dividing module 51 is configured to divide an interface into 2^{∗}N blocks according to the number of interface element types in an interface division request, where N is the number of interface element types, and the interface division request includes the number of interface element types, display positions of the interface element types, each interface element type, and an interface element type of each interface element.

The first drawing module 52 is configured to: when the display positions of the interface element types indicate that the interface element types are displayed in a row, set all blocks in a first row as text blocks, display an interface element type in each text block, set all blocks in a second row as element blocks, and draw, in each element block, an interface element corresponding to an interface element type displayed in a text block in a same column.

The second drawing module 53 is configured to: when the display positions of the interface element types indicate that the interface element types are displayed in a column, set all blocks in a first column as text blocks, display an interface element type in each text block, set all blocks in a second column as element blocks, and draw, in each element block, an interface element corresponding to an interface element type displayed in a text block in a same row.

The working mechanism of each module above is described in the embodiment corresponding to FIG. 4A, and is not further described herein.

In the embodiment of the present invention, the terminal divides, according to the number of interface element types selected by the user, an interface into blocks, the number of which is twice the number of interface element types, and according to the display positions of the interface element types selected by the user, displays the interface element types in all blocks of the first row or first column, and displays, in an adjacent block in the second row or an adjacent block in the second column, all interface elements of an interface element type corresponding to a block in the same column or same row. Therefore, the terminal may provide interfaces with different layouts for the user according to the autonomous selection of the user, set a block where each interface element is located, and set an interface element type of each interface element. Therefore, the objective of laying out an interface according to the user's preference is achieved.

Persons of ordinary skill in the art may understand that all or a part of the steps of the methods in the embodiments may be implemented by a program instructing relevant hardware. The program may be stored in a computer readable storage medium. When the program is run, the foregoing steps of the methods in the embodiments are performed. The storage medium may be any medium capable of storing program codes, such as a ROM, a RAM, a magnetic disk, or an optical disk.

Finally, it should be noted that the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solution described in the foregoing embodiments or make equivalent replacements to some technical features thereof, without departing from the idea of the technical solution of the embodiments of the present invention.

## Claims

1. An interface autonomous planning computer implemented method, comprising:
dividing, according to an interface layout request, an interface into regions, the number of which is the same as the number of interface element types in the interface layout request, wherein the interface layout request comprises the number of interface element types (step 11) and wherein the interface element type is text information indicating the interface element type;
dividing each region into a text block and an element block (step 12); the text block being used to display an interface element type corresponding to the region, and the element block being used to draw all interface elements of the interface element type corresponding to the region, wherein the interface elements are icons; and
arranging, according to an interface element division request, each interface element to an element block of a region corresponding to an interface element type of the interface element, and displaying, in a text block of each region, an interface element type corresponding to the region, wherein the interface element division request comprises interface element types of interface elements and interface element types corresponding to the regions (step 13);
**characterized in that**
after the dividing an interface into regions, the number of which is the same as the number of interface element types, the method further comprises:
determining a shape and size of each region on the interface according to the shape and size of the region in the interface layout request, wherein the interface layout request further comprises the shape and size of the region.

2. The interface autonomous planning computer implemented method according to claim 1, wherein the interface layout request further comprises a region layout mode, and the dividing, according to an interface layout request, an interface into regions, the number of which is the same as the number of interface element types in the interface layout request, further comprises: arranging the regions according to the region layout mode.

3. The interface autonomous planning computer implemented method according to claim 1 or 2, wherein the arranging, according to an interface element division request, each interface element to an element block of a region corresponding to an interface element type of the interface element, and displaying, in a text block of each region, an interface element type corresponding to the region, comprises:
arranging, according to a received first interface element division request, each interface element to an element block of a region corresponding to an interface element type of the interface element, wherein the first interface element division request comprises an interface element type of each interface element and an interface element type corresponding to each region; and
displaying, in a text block of each region, the interface element type corresponding to the region in the first interface element division request.

4. The interface autonomous planning computer implemented method according to claim 1 or 2, wherein the arranging, according to an interface element division request, each interface element to an element block of a region corresponding to an interface element type of the interface element, and displaying, in a text block of each region, an interface element type corresponding to the region, comprises:
displaying, in a text block of each region, the interface element type corresponding to the region in sequence according to second interface element division requests received in sequence, wherein a second interface element division request comprises an interface element type corresponding to a region; and
arranging, according to third interface element division requests received in sequence, each interface element to an element block of a region corresponding to an interface element type of the interface element in sequence, wherein each of the third interface element division requests comprises an interface element type of an interface element;

5. The interface autonomous planning computer implemented method according to claim 1, wherein the dividing each region into a text block and an element block comprises:
dividing each region into two blocks according to a block shape, a block position, and a block size in a block layout request; and
setting one of the blocks as a text block and the other block as an element block according to a block attribute in the block layout request.

6. The interface autonomous planning computer implemented method according to claim 1 or 2, wherein before the arranging each interface element to an element block of a region corresponding to an interface element type of the interface element, the method further comprises:
setting, according to an icon and a shape of an interface element, the icon and shape of the interface element, wherein the interface element division request further comprises the icon and shape of the interface element.

7. An interface autonomous planning apparatus, comprising:
a receiving module (21), configured to: receive an interface layout request, wherein the interface layout request comprises the number of interface element types; and further configured to receive an interface element division request;
a region dividing module (22), configured to divide, according to the interface layout request, an interface into regions, the number of which is the same as the number of interface element types and wherein the interface element type is text information indicating the interface element type;
a block dividing module (23), configured to divide each region into a text block and an element block; the text block being used to display an interface element type corresponding to the region, and the element block being used to draw all interface elements of the interface element type corresponding to the region, wherein the interface elements are icons; and
an arranging module (24), configured to arrange, according to the interface element division request received by the receiving module, each interface element to an element block of a region corresponding to an interface element type of the interface element, and display, in a text block of each region, an interface element type corresponding to the region, wherein the interface element division request comprises interface element types of interface elements and interface element types corresponding to the regions;
**characterized in that** the region dividing module is further configured to determine a shape and size of each region on the interface according to the shape and size of the region in the interface layout request, wherein the interface layout request further comprises the shape and size of the region.

8. The interface autonomous planning apparatus according to claim 7, wherein the interface layout request further comprises a region layout mode, and the region dividing module is specifically configured to arrange the regions according to the region layout mode.

9. The interface autonomous planning apparatus according to claim 7 or 8, wherein: the arranging module comprises a first element arranging unit (241) and a first type displaying unit (242);
the interface element division request comprises a first interface element division request, wherein the first interface element division request comprises an interface element type of each interface element and an interface element type corresponding to each region;
the first element arranging unit (241) is configured to arrange, according to the received first interface element division request, each interface element to an element block of a region corresponding to an interface element type of the interface element; and
the first type displaying unit (242) is configured to display, in a text block of each region, an interface element type corresponding to the region in the first interface element division request.

10. The interface autonomous planning apparatus according to claim 7 or 8, wherein: the arranging module comprises a second element arranging unit and a second type displaying unit;
the interface element division request comprises a second interface element division request and a third interface element division request, wherein the second interface element division request comprises an interface element type corresponding to a region and the third interface element division request comprises an interface element type of an interface element;
the second type displaying unit is configured to display, in a text block of each region, an interface element type corresponding to the region in sequence according to second interface element division requests received in sequence; and
the second element arranging unit is configured to arrange, according to third interface element division requests received in sequence, each interface element to an element block of a region corresponding to an interface element type of the interface element in sequence;

11. The interface autonomous planning apparatus according to claim 7, wherein:
the receiving module is further configured to receive a block layout request, wherein the block layout request comprises a block shape, a block position, and a block size; and
the block dividing module is specifically configured to divide each region into two blocks according to the block shape, block position, and block size in the block layout request, and set one of the blocks as a text block and the other block as an element block according to a block attribute in the block layout request.

12. The interface autonomous planning apparatus according to claim 7 or 8, wherein the arranging module is further configured to set, according to an icon and a shape of an interface element, the icon and shape of the interface element, wherein the interface element division request further comprises the icon and shape of the interface element.

## Patentansprüche

1. Computerimplementiertes Verfahren für autonome Schnittstellenplanung, das Folgendes umfasst:
Aufteilen, gemäß einer Schnittstellenlayoutanforderung, einer Schnittstelle in Bereiche, deren Anzahl die gleiche ist wie die Anzahl an Schnittstellenelementtypen in der Schnittstellenlayoutanforderung, wobei die Schnittstellenlayoutanforderung die Anzahl an Schnittstellenelementtypen (Schritt 11) umfasst und wobei der Schnittstellenelementtyp Textinformationen sind, die den Schnittstellenelementtyp angeben;
Aufteilen jedes Bereichs in einen Textblock und einen Elementblock (Schritt 12); wobei der Textblock dazu verwendet wird, einen Schnittstellenelementtyp anzuzeigen, der dem Bereich entspricht, und der Elementblock dazu verwendet wird, alle Schnittstellenelemente des Schnittstellenelementtyps, der dem Bereich entspricht, zu zeichnen, wobei die Schnittstellenelemente Bildzeichen sind; und
Verteilen, gemäß einer Schnittstellenelementaufteilungsanforderung, jedes Schnittstelleelements an einen Elementblock eines Bereichs, der einem Schnittstellenelementtyp des Schnittstellenelements entspricht, und Anzeigen, in einem Textblock jeden Bereichs, eines Schnittstellenelementtyps, der dem Bereich entspricht, wobei die Schnittstellenelementaufteilungsanforderung Schnittstellenelementtypen von Schnittstellenelementen und Schnittstellenelementtypen, die den Bereichen entsprechen (Schritt 13), umfasst;
**dadurch gekennzeichnet, dass**
nach dem Aufteilen einer Schnittstelle in Bereiche, deren Anzahl die gleiche ist wie die Anzahl an Schnittstellenelementtypen, das Verfahren ferner Folgendes umfasst:
Bestimmen einer Form und einer Größe jedes Bereichs an der Schnittstelle gemäß der Form und der Größe des Bereichs in der Schnittstellenlayoutanforderung, wobei die Schnittstellenlayoutanforderung ferner die Form und die Größe des Bereichs umfasst.

2. Computerimplementiertes Verfahren für autonome Schnittstellenplanung nach Anspruch 1, wobei die Schnittstellenlayoutanforderung ferner einen Bereichslayoutmodus umfasst und wobei das Aufteilen einer Schnittstelle gemäß einer Schnittstellenlayoutanforderung in Bereiche, deren Anzahl gleich der Anzahl an Schnittstellenelementtypen in der Schnittstellenlayoutanforderung ist, ferner das Verteilen der Bereiche gemäß dem Bereichslayoutmodus umfasst.

3. Computerimplementiertes Verfahren für autonome Schnittstellenplanung nach Anspruch 1 oder 2, wobei das Verteilen, gemäß einer Schnittstellenelementaufteilungsanforderung, jedes Schnittstelleelements an einen Elementblock eines Bereichs, der einem Schnittstellenelementtyp des Schnittstellenelements entspricht, und das Anzeigen, in einem Textblock jeden Bereichs, eines Schnittstellenelementtyps, der dem Bereich entspricht, Folgendes umfasst:
Verteilen, gemäß einer empfangenen ersten Schnittstellenelementaufteilungsanforderung, jedes Schnittstellenelements an einen Elementblock eines Bereichs, der einem Schnittstellenelementtyp des Schnittstellenelements entspricht, wobei die erste Schnittstellenelementaufteilungsanforderung einen Schnittstellenelementtyp jedes Schnittstellenelements und einen Schnittstellenelementtyp, der jedem Bereich entspricht, umfasst; und
Anzeigen, in einem Textblock jedes Bereichs, des Schnittstellenelementtyps, der dem Bereich in der ersten Schnittstellenelementaufteilungsanforderung entspricht.

4. Computerimplementiertes Verfahren für autonome Schnittstellenplanung nach Anspruch 1 oder 2, wobei das Verteilen, gemäß einer Schnittstellenelementaufteilungsanforderung, jedes Schnittstelleelements an einen Elementblock eines Bereichs, der einem Schnittstellenelementtyp des Schnittstellenelements entspricht, und das Anzeigen, in einem Textblock jeden Bereichs, eines Schnittstellenelementtyps, der dem Bereich entspricht, Folgendes umfasst:
Anzeigen, in einem Textblock jedes Bereichs, des Schnittstellenelementtyps, der, gemäß nachfolgend empfangenen zweiten Schnittstellenelementaufteilungsanforderungen, dem nachfolgenden Bereich entspricht, wobei eine zweite Schnittstellenelementaufteilungsanforderung ein Schnittstellenelementtyp umfasst, der einem Bereich entspricht; und
Verteilen, gemäß dritten nachfolgend empfangenen Schnittstellenelementaufteilungsanforderungen, jedes Schnittstellenelements an einen Elementblock eines Bereichs, der einem Schnittstellenelementtyp des nachfolgenden Schnittstellenelements entspricht, wobei jede der dritten Schnittstellenelementaufteilungsanforderungen ein Schnittstellenelementtyp eines Schnittstellenelements umfasst.

5. Computerimplementiertes Verfahren für autonome Schnittstellenplanung nach Anspruch 1, wobei das Aufteilen jedes Bereichs in einen Textblock und einen Elementblock Folgendes umfasst:
Aufteilen jedes Bereichs in zwei Blöcke gemäß einer Blockform, einer Blockposition und einer Blockgröße in einer Blocklayoutanforderung; und
Festlegen, gemäß einem Blockattribut in der Blocklayoutanforderung, eines der Blöcke als einen Textblock und des anderen Blocks als einen Elementblock.

6. Computerimplementiertes Verfahren für autonome Schnittstellenplanung nach Anspruch 1 oder 2, wobei vor dem Verteilen jedes Schnittstellenelements an einen Elementblock eines Bereichs, der einem Schnittstellenelementtyp des Schnittstellenelements entspricht, das Verfahren ferner Folgendes umfasst:
Festlegen, gemäß einem Bildzeichen und einer Form eines Schnittstellenelements, des Bildzeichens und der Form des Schnittstellenelements, wobei die Schnittstellenelementaufteilungsanforderung ferner das Bildzeichen und die Form des Schnittstellenelements umfasst.

7. Einrichtung für autonome Schnittstellenplanung, die Folgendes umfasst:
ein Empfangsmodul (21), das dazu konfiguriert ist, eine Schnittstellenlayoutanforderung zu empfangen, wobei die Schnittstellenlayoutanforderung die Anzahl an Schnittstellenelementtypen umfasst; und ferner dazu konfiguriert ist, eine Schnittstellenelementaufteilungsanforderung zu empfangen;
ein Bereichsaufteilungsmodul (22), das dazu konfiguriert ist, eine Schnittstelle gemäß der Schnittstellenlayoutanforderung in Bereiche aufzuteilen, deren Anzahl die gleiche ist wie die Anzahl an Schnittstellenelementtypen, und wobei der Schnittstellenelementtyp Textinformationen sind, die den Schnittstellenelementtyp angeben;
ein Blockaufteilungsmodul (23), das dazu konfiguriert ist, jeden Bereich in einen Textblock und einen Elementblock aufzuteilen; wobei der Textblock dazu verwendet wird, einen Schnittstellenelementtyp anzuzeigen, der dem Bereich entspricht, und der Elementblock dazu verwendet wird, alle Schnittstellenelemente des Schnittstellenelementtyps, der dem Bereich entspricht, zu zeichnen, wobei die Schnittstellenelemente Bildzeichen sind; und
ein Verteilungsmodul (24), das dazu konfiguriert ist, gemäß der Schnittstellenelementaufteilungsanforderung, die durch das Empfangsmodul empfangen wird, jedes Schnittstellenelement an einen Elementblock eines Bereichs zu verteilen, der einem Schnittstellenelementtyp des Schnittstellenelements entspricht, und in einem Textblock jedes Bereichs, einen Schnittstellenelementtyp anzuzeigen, der dem Bereich entspricht, wobei die Schnittstellenelementaufteilungsanforderung Schnittstellenelementtypen von Schnittstellenelementen und Schnittstellenelementtypen, die den Bereichen entsprechen, umfasst;
**dadurch gekennzeichnet, dass** das Bereichsaufteilungsmodul ferner dazu konfiguriert ist, eine Form und eine Größe jedes Bereichs an der Schnittstelle gemäß der Form und der Größe des Bereichs in der Schnittstellenlayoutanforderung zu bestimmen, wobei die Schnittstellenlayoutanforderung ferner die Form und die Größe des Bereichs umfasst.

8. Einrichtung für autonome Schnittstellenplanung nach Anspruch 7, wobei die Schnittstellenlayoutanforderung ferner einen Bereichslayoutmodus umfasst und wobei das Bereichsaufteilungsmodul konkret dazu konfiguriert ist, die Bereiche gemäß dem Bereichslayoutmodus zu verteilen.

9. Einrichtung für autonome Schnittstellenplanung nach Anspruch 7 oder 8, wobei: das Verteilungsmodul eine erste Elementverteilungseinheit (241) und eine erste Typanzeigeeinheit (242) umfasst;
die Schnittstellenelementaufteilungsanforderung eine erste Schnittstellenelementaufteilungsanforderung umfasst, wobei die erste Schnittstellenelementaufteilungsanforderung einen Schnittstellenelementtyp jedes Schnittstellenelements und einen Schnittstellenelementtyp, der jedem Bereich entspricht, umfasst;
die erste Elementverteilungseinheit (241) dazu konfiguriert ist, gemäß der empfangenen ersten Schnittstellenelementaufteilungsanforderung, jedes Schnittstellenelement an einen Elementblock eines Bereichs zu verteilen, der einem Schnittstellenelementtyp des Schnittstellenelements entspricht; und
die erste Typanzeigeeinheit (242) dazu konfiguriert ist, in einem Textblock jedes Bereichs, einen Schnittstellenelementtyp anzuzeigen, der dem Bereich in der ersten Schnittstellenelementaufteilungsanforderung entspricht.

10. Einrichtung für autonome Schnittstellenplanung nach Anspruch 7 oder 8, wobei: das Verteilungsmodul eine zweite Elementverteilungseinheit und eine zweite Typanzeigeeinheit umfasst;
die Schnittstellenelementaufteilungsanforderung eine zweite Schnittstellenelementaufteilungsanforderung und eine dritte Schnittstellenelementaufteilungsanforderung umfasst, wobei die zweite Schnittstellenelementaufteilungsanforderung einen Schnittstellenelementtyp umfasst, der einem Bereich entspricht, und die dritte Schnittstellenelementaufteilungsanforderung einen Schnittstellenelementtyp umfasst, der einem Schnittstellenelement entspricht;
die zweite Typanzeigeeinheit dazu konfiguriert ist, in einem Textblock jedes Bereichs, einen Schnittstellenelementtyp anzuzeigen, der, gemäß nachfolgend empfangenen zweiten Schnittstellenelementaufteilungsanforderungen, dem nachfolgenden Bereich entspricht; und die zweite Elementverteilungseinheit dazu konfiguriert ist, gemäß dritten nachfolgend empfangenen Schnittstellenaufteilungsanforderungen, jedes Schnittstellenelement an einen Elementblock eines Bereichs zu verteilen, der einem Schnittstellenelementtyp des nachfolgenden Schnittstellenelements entspricht.

11. Einrichtung für autonome Schnittstellenplanung nach Anspruch 7, wobei
das Empfangsmodul ferner dazu konfiguriert ist, eine Blocklayoutanforderung zu empfangen, wobei die Blocklayoutanforderung eine Blockform, eine Blockposition und eine Blockgröße umfasst; und
wobei das Blockaufteilungsmodul konkret dazu konfiguriert ist, jeden Bereich gemäß der Blockform, der Blockposition und der Blockgröße in der Blocklayoutanforderung in zwei Blöcke aufzuteilen und, gemäß einem Blockattribut in der Blocklayoutanforderung, einen der Blöcke als einen Textblock und den anderen Block als einen Elementblock festzulegen.

12. Einrichtung für autonome Schnittstellenplanung nach Anspruch 7 oder 8, wobei das Verteilungsmodul ferner dazu konfiguriert ist, gemäß einem Bildzeichen und einer Form eines Schnittstellenelements, das Bildzeichen und die Form des Schnittstellenelements festzulegen, wobei die Schnittstellenelementaufteilungsanforderung ferner das Bildzeichen und die Form des Schnittstellenelements umfasst.

## Revendications

1. Procédé mis en œuvre par ordinateur de planification autonome d'interface, comprenant :
la division, conformément à une demande de disposition d'interface, d'une interface en zones, dont le nombre est le même que le nombre de types d'élément d'interface dans la demande de disposition d'interface, dans lequel la demande de disposition d'interface comprend le nombre de types d'élément d'interface (étape 11) et dans lequel le type d'élément d'interface est une information textuelle indiquant le type d'élément d'interface ;
la division de chaque zone en un bloc de texte et un bloc d'éléments (étape 12) ; le bloc de texte étant utilisé pour afficher un type d'élément d'interface correspondant à la zone, et le bloc d'éléments étant utilisé pour tracer tous les éléments d'interface du type d'élément d'interface correspondant à la zone, dans lequel les éléments d'interface sont des icônes ; et
l'agencement, conformément à une demande de division d'éléments d'interface, de chaque élément d'interface dans un bloc d'éléments d'une zone correspondant à un type d'élément d'interface de l'élément d'interface, et l'affichage, dans un bloc de texte de chaque zone, d'un type d'élément d'interface correspondant à la zone, dans lequel la demande de division d'éléments d'interface comprend des types d'élément d'interface d'éléments d'interface et des types d'élément d'interface correspondant aux zones (étape 13) ;
**caractérisé en ce que**
après la division d'une interface en zones, dont le nombre est le même que le nombre de types d'élément d'interface, le procédé comprend en outre :
la détermination d'une forme et d'une taille de chaque zone sur l'interface conformément à la forme et à la taille de la zone dans la demande de disposition d'interface, dans lequel la demande de disposition d'interface comprend en outre la forme et la taille de la région.

2. Procédé mis en œuvre par ordinateur de planification autonome d'interface selon la revendication 1, dans lequel la demande de disposition d'interface comprend en outre un mode de disposition de zone, et la division, conformément à une demande de disposition d'interface, d'une interface en zones, dont le nombre est le même que le nombre de types d'élément d'interface dans la demande de disposition d'interface, comprend en outre :
l'agencement des zones selon le mode de disposition de zones.

3. Procédé mis en œuvre par ordinateur de planification autonome d'interface selon la revendication 1 ou 2, dans lequel l'agencement, conformément à une demande de division d'éléments d'interface, de chaque élément d'interface dans un bloc d'éléments d'une zone correspondant à un type d'élément d'interface de l'élément d'interface, et l'affichage, dans un bloc de texte de chaque zone, d'un type d'élément d'interface correspondant à la zone, comprend :
l'agencement, conformément à une première demande de division d'éléments d'interface reçue, de chaque élément d'interface dans un bloc d'éléments d'une zone correspondant à un type d'élément d'interface de l'élément d'interface, dans lequel la première demande de division d'éléments d'interface comprend un type d'élément d'interface de chaque élément d'interface et un type d'élément d'interface correspondant à chaque zone ; et
l'affichage, dans un bloc de texte de chaque zone, du type d'élément d'interface correspondant à la région dans la première demande de division d'éléments d'interface.

4. Procédé mis en œuvre par ordinateur de planification autonome d'interface selon la revendication 1 ou 2, dans lequel l'agencement, conformément à une demande de division d'éléments d'interface, de chaque élément d'interface dans un bloc d'éléments d'une zone correspondant à un type d'élément d'interface de l'élément d'interface, et l'affichage, dans un bloc de texte de chaque zone, d'un type d'élément d'interface correspondant à la région, comprennent :
l'affichage, dans un bloc de texte de chaque région, du type d'élément d'interface correspondant à la région dans une séquence conformément à des deuxièmes demandes de division d'éléments d'interface reçues dans une séquence, dans lequel une deuxième demande de division d'éléments d'interface comprend un type d'élément d'interface correspondant à une région ; et
l'agencement, selon des troisièmes demandes de division d'éléments d'interface reçues dans une séquence, de chaque élément d'interface dans un bloc d'éléments d'une zone correspondant à un type d'élément d'interface de l'élément d'interface dans une séquence, dans lequel chacune des troisièmes demandes de division d'éléments d'interface comprend un type d'élément d'interface d'un élément d'interface.

5. Procédé mis en œuvre par ordinateur de planification autonome d'interface selon la revendication 1, dans lequel la division de chaque zone en un bloc de texte et un bloc d'éléments comprend :
la division de chaque zone en deux blocs conformément à une forme de bloc, une position de bloc et une taille de bloc dans une demande de disposition de bloc ; et
la définition d'un des blocs en tant que bloc de texte et de l'autre bloc en tant que bloc d'éléments selon un attribut de bloc dans la demande de disposition de bloc.

6. Procédé mis en œuvre par ordinateur de planification autonome d'interface selon la revendication 1 ou 2, dans lequel avant l'agencement de chaque élément d'interface dans un bloc d'éléments d'une zone correspondant à un type d'élément d'interface de l'élément d'interface, le procédé comprend en outre :
la définition, conformément à une icône et à une forme d'un élément d'interface, de l'icône et de la forme de l'élément d'interface, dans lequel la demande de division d'éléments d'interface comprend en outre l'icône et la forme de l'élément d'interface.

7. Appareil de planification autonome d'interface, comprenant :
un module de réception (21), configuré pour : recevoir une demande de disposition d'interface, dans lequel la demande de disposition d'interface comprend le nombre de types d'élément d'interface ; et configuré en outre pour recevoir une demande de division d'éléments d'interface ;
un module de division en zones (22), configuré pour diviser, conformément à la demande de disposition d'interface, une interface en zones, dont le nombre est le même que le nombre de types d'élément d'interface et dans lequel le type d'élément d'interface est une information textuelle indiquant le type d'élément d'interface ;
un module de division en blocs (23), configuré pour diviser chaque zone en un bloc de texte et un bloc d'éléments ; le bloc de texte étant utilisé pour afficher un type d'élément d'interface correspondant à la région, et le bloc d'éléments étant utilisé pour tracer tous les éléments d'interface du type d'élément d'interface correspondant à la zone, dans lequel les éléments d'interface sont des icônes ; et
un module d'agencement (24), configuré pour agencer, selon la demande de division d'éléments d'interface reçue par le module de réception, chaque élément d'interface dans un bloc d'éléments d'une zone correspondant à un type d'élément d'interface de l'élément d'interface, et afficher, dans un bloc de texte de chaque zone, un type d'élément d'interface correspondant à la zone, dans lequel la demande de division d'éléments d'interface comprend des types d'élément d'interface d'éléments d'interface et des types d'élément d'interface correspondant aux zones ;
**caractérisé en ce que** le module de division en zones est en outre configuré pour déterminer une forme et une taille de chaque zone sur l'interface conformément à la forme et à la taille de la zone dans la demande de disposition d'interface, dans lequel la demande de disposition d'interface comprend en outre la forme et la taille de la zone.

8. Appareil de planification autonome d'interface selon la revendication 7, dans lequel la demande de disposition d'interface comprend en outre un mode de disposition de zones, et le module de division en zones est spécifiquement configuré pour agencer les zones conformément au mode de disposition de zones.

9. Appareil de planification autonome d'interface selon la revendication 7 ou 8, dans lequel : le module d'agencement comprend une première unité d'agencement d'éléments (241) et une première unité d'affichage de types (242) ;
la demande de division d'éléments d'interface comprend une première demande de division d'éléments d'interface, dans lequel la première demande de division d'éléments d'interface comprend un type d'élément d'interface de chaque élément d'interface et un type d'élément d'interface correspondant à chaque zone ;
la première unité d'agencement d'éléments (241) est configurée pour agencer, selon la première demande de division d'éléments d'interface reçue, chaque élément d'interface dans un bloc d'éléments d'une zone correspondant à un type d'élément d'interface de l'élément d'interface ; et
la première unité d'affichage de types (242) est configurée pour afficher, dans un bloc de texte de chaque zone, un type d'élément d'interface correspondant à la zone dans la première demande de division d'éléments d'interface.

10. Appareil de planification autonome d'interface selon la revendication 7 ou 8, dans lequel : le module d'agencement comprend une seconde unité d'agencement d'éléments et une seconde unité d'affichage de types ;
la demande de division d'éléments d'interface comprend une deuxième demande de division d'éléments d'interface et une troisième demande de division d'éléments d'interface, dans lequel la deuxième demande de division d'éléments d'interface comprend un type d'élément d'interface correspondant à une zone et la troisième demande de division d'éléments d'interface comprend un type d'élément d'interface d'un élément d'interface ;
la seconde unité d'affichage de types est configurée pour afficher, dans un bloc de texte de chaque zone, un type d'élément d'interface correspondant à la zone dans une séquence conformément à des deuxièmes demandes de division d'éléments d'interface reçues dans une séquence ; et
la seconde unité d'agencement d'éléments est configurée pour agencer, conformément à des troisièmes demandes de division d'éléments d'interface reçues dans une séquence, chaque élément d'interface dans un bloc d'éléments d'une zone correspondant à un type d'élément d'interface de l'élément d'interface dans une séquence.

11. Appareil de planification autonome d'interface selon la revendication 7, dans lequel :
le module de réception est en outre configuré pour recevoir une demande de disposition de bloc, dans lequel la demande de disposition de bloc comprend une forme de bloc, une position de bloc et une taille de bloc ; et
le module de division en blocs est spécifiquement configuré pour diviser chaque zone en deux blocs conformément à la forme de bloc, la position de bloc et la taille de bloc dans la demande de disposition de bloc, et définir un des blocs en tant que bloc de texte et l'autre bloc en tant que bloc d'éléments conformément à un attribut de bloc dans la demande de disposition de bloc.

12. Appareil de planification autonome d'interface selon la revendication 7 ou 8, dans lequel le module d'agencement est en outre configuré pour définir, conformément à une icône et à une forme d'un élément d'interface, l'icône et la forme de l'élément d'interface, dans lequel la demande de division d'éléments d'interface comprend en outre l'icône et la forme de l'élément d'interface.
